# EUROPEAN PATENT APPLICATION

(11) **EP 3 156 630 A1**
(43) Date of publication of application: **19.04.2017**
(21) Application number: 16191832.1
(22) Date of filing: 30.09.2016
(51) Int. Cl.: F02C 7/32, F02C 6/00, F02C 7/36, F01D 15/12, F01D 15/10

(54) **SYSTEMS AND METHODS TO FACILITATE ENHANCING TURBINE OUTPUT USING AN AUXILIARY GENERATOR**

(30) Priority: 15.10.2015 US 201514883658
(71) Applicant: General Electric Company, Schenectady, NY 12345 (US)
(72) Inventor: KLOSINSKI, Joseph Philip, Atlanta, GA Georgia 30339-8402 (US); SCIPIO, Alston Ilford, Atlanta, GA Georgia 30339 (US); LAMBERT, James Oldham, Atlanta, GA Georgia 30339-8402 (US); TORNROOS, Karl, Atlanta, GA Georgia 30339 (US); EKANAYAKE, Sanji, Atlanta, GA Georgia 30339 (US)
(74) Representative: Lee, Brenda

(57) **Abstract**

A gas turbine engine system 1,2,3,4 includes a gas turbine engine 10 with a rotating element 48, at least one primary rotor shaft 38 coupled to the rotating element 48, and a primary generator 30 coupled to the at least one primary rotor shaft 38. The system further includes at least one auxiliary rotor shaft 36 coupled to the at least one primary rotor shaft 38, such that rotation of the at least one primary rotor shaft 38 causes rotation of the at least one auxiliary rotor shaft 36. The at least one auxiliary rotor shaft 36 is oriented substantially perpendicularly to the at least one primary rotor shaft 38. An auxiliary generator 32 is coupled to the at least one auxiliary rotor shaft 36, such that the auxiliary generator 32 is in parallel configuration to the primary generator 30.

## Description

The field of the invention relates generally to turbine engines, and more particularly to systems and methods of using an auxiliary generator to facilitate improving operation of an existing primary generator.

At least some known turbine engines include a generator to produce electric energy. Within at least some known turbines, improving the power factor in the generator facilitates improving the turbine performance. However, in at least some known turbine engines, increasing the power factor may cause the existing generator's capability to be exceeded. As such, the benefits of upgrading the turbine may be limited by the generator.

To accommodate turbine upgrades, at least some known turbine assemblies may require generator re-wind or the installation of a new generator. However, the additional costs associated with extensive outage durations and/or new generators may make it prohibitively expensive to retrofit or replace generators. Additionally, to improve performance, other turbine assemblies include a second serial auxiliary/pony generator coupled in line with the primary generator. However, there may be insufficient physical space around the primary generator to couple the auxiliary generator in line with the primary generator. As such, the possible performance benefits of including the auxiliary

In one aspect, a gas turbine engine system is provided. The system includes a gas turbine engine with a rotating element, at least one primary rotor shaft coupled to the rotating element, and a primary generator coupled to the at least one primary rotor shaft. The system further includes at least one auxiliary rotor shaft coupled to the at least one primary rotor shaft, such that rotation of the at least one primary rotor shaft causes rotation of the at least one auxiliary rotor shaft. The at least one auxiliary rotor shaft is oriented substantially perpendicularly to the at least one primary rotor shaft. An auxiliary generator is coupled to the at least one auxiliary rotor shaft, such that the auxiliary generator is in parallel configuration to the primary generator.

In another aspect, a power generating system is provided. The system includes a turbine engine assembly comprising a gas turbine engine with a rotating element and at least one primary rotor shaft coupled to the rotating element. The system further includes a generator assembly comprising a primary generator coupled to the at least one primary rotor shaft. The generator assembly also includes at least one auxiliary rotor shaft coupled to the at least one primary rotor shaft, such that rotation of the at least one primary rotor shaft causes rotation of the at least one auxiliary rotor shaft. The at least one auxiliary rotor shaft is oriented substantially perpendicularly to the at least one primary rotor shaft. An auxiliary generator is coupled to the at least one auxiliary rotor shaft, such that the auxiliary generator is in parallel configuration to the primary generator. Further, at least one energy transmission mechanism is coupled between the at least one primary rotor shaft and the at least one auxiliary rotor shaft.

In the drawings:
FIG. 1 is a schematic diagram of an exemplary gas turbine system;
FIG. 2 is a schematic diagram of an alternative gas turbine system;
FIG. 3 is a schematic diagram of a second alternative gas turbine system; and
FIG. 4 is a schematic diagram of a third alternative gas turbine system.

Unless otherwise indicated, approximating language, such as "generally," "substantially," and "about," as used herein indicates that the term so modified may apply to only an approximate degree, as would be recognized by one of ordinary skill in the art, rather than to an absolute or perfect degree. Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

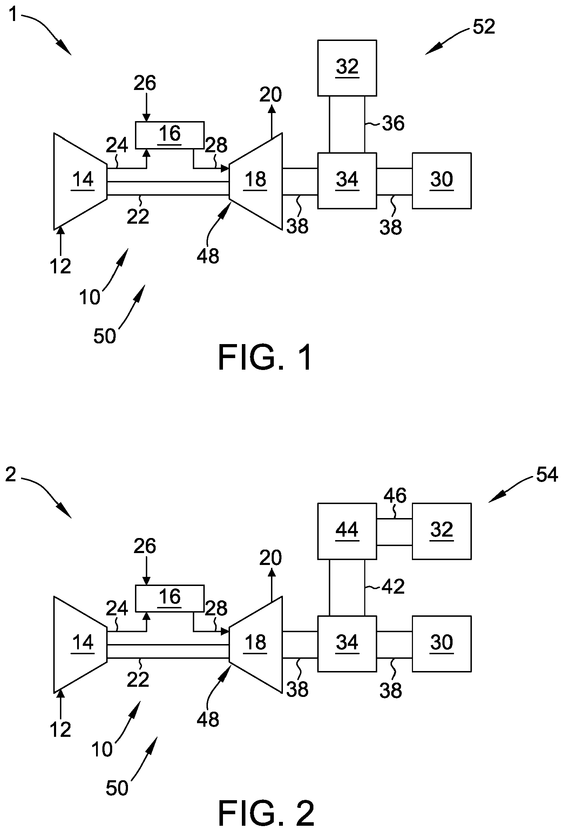

FIG. 1 is a schematic diagram of an exemplary gas turbine system 1. In the exemplary embodiment, gas turbine system 1 includes a turbine engine 10. More specifically, in the exemplary embodiment turbine engine 10 is a gas turbine that includes a compressor section 14, a combustor section 16 coupled downstream from compressor section 14, a turbine section 18 coupled downstream from combustor section 16, and an exhaust section 20 coupled downstream from turbine section 18.

In the exemplary embodiment, turbine section 18 is coupled to compressor section 14 via a rotor assembly 22. It should be noted that, as used herein, the term "couple" is not limited to a direct mechanical, electrical, and/or communication connection between components, but may also include an indirect mechanical, electrical, and/or communication connection between multiple components.

During operation of gas turbine 10, compressor section 14 receives an air flow 12. Compressor section 14 converts mechanical rotation energy from rotor assembly 22 to compress air flow 12 to a higher pressure and temperature. Compressor section 14 discharges a flow of compressed air 24 to combustor section 16. In combustor section 16, compressed air 24 is mixed with a flow of fuel 26 and ignited to generate combustion gases 28 that are channeled towards turbine section 18. Turbine section 18 converts thermal energy from combustion gases 28 to mechanical rotation energy of rotor assembly 22. In the exemplary embodiment, turbine 18 is a rotating element 48. Rotor assembly 22 is coupled to a load such as, but not limited to, a primary electrical generator 30 and/or a mechanical drive application (not shown) via at least one primary rotor shaft 38.

In the exemplary embodiment, primary rotor shaft 38 is coupled to an auxiliary rotor shaft 36, such that rotation of primary rotor shaft 38 causes rotation of auxiliary rotor shaft 36. In the exemplary embodiment, primary rotor shaft 38 and auxiliary rotor shaft 36 are oriented substantially perpendicularly to each other. Although auxiliary rotor shaft 36 is illustrated as being substantially perpendicular to primary rotor shaft 38, in alternative embodiments, primary rotor shaft 38 and auxiliary rotor shaft 36 may be oriented at any suitable angle relative to each other that enables transfer of mechanical rotational energy as described herein. In the exemplary embodiment, an auxiliary/pony generator 32 is coupled to auxiliary rotor shaft 36 such that auxiliary generator 32 is in a parallel configuration to primary generator 30. It should be noted that, as used herein, the term "parallel configuration" is not limited to a geometric relationship, but may also include multiple components, such as generators, that are not connected along a single path.

In the exemplary embodiment, primary rotor shaft 38 is coupled to auxiliary rotor shaft 36 via an energy transmission mechanism 34. More specifically, in the exemplary embodiment at least a first energy transmission mechanism 34 is coupled between primary rotor shaft 38 and auxiliary rotor shaft 36. Energy transmission mechanism 34 enables the partial or full transfer of rotational energy from primary rotor shaft 38 to auxiliary rotor shaft 36. For example, output from gas engine turbine 10 not realized by primary generator 30, is realized by auxiliary generator 32 through transfer of mechanical rotational energy by auxiliary rotor shaft 36. In the exemplary embodiment, energy transmission mechanism 34 is a mechanical gear box, such as, but not limited to, a hydraulic clutch assembly, a splined quill shaft, a bevel gear, and speed reducing gears. In alternative embodiments, energy transmission mechanism 34 may include a different transmission mechanism, such as, but not limited to, a hydraulic gear box.

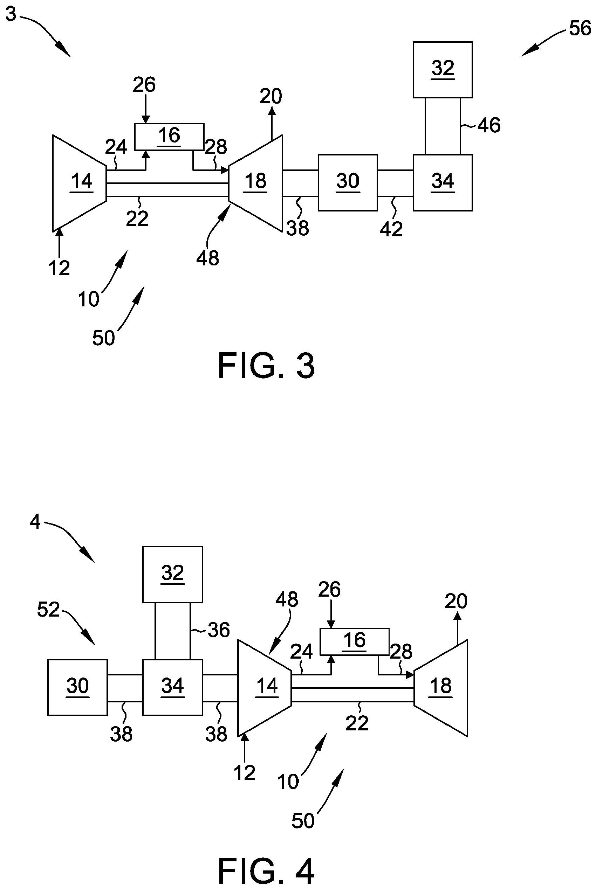

In the exemplary embodiment, auxiliary rotor shaft 36 is between turbine 18 and primary generator 30. Also in the exemplary embodiment, energy transmission mechanism 34 is between turbine 18 and primary generator 30. Although both auxiliary rotor shaft 36 and energy transmission mechanism 34 are illustrated as being on turbine 18 side of gas turbine engine 10, in alternative embodiments, both auxiliary rotor shaft 36 and energy transmission mechanism 34 may be located on the compressor 14 side of gas turbine engine 10, as described in further detail with respect to FIG. 4 below.

In the exemplary embodiment, attachment of auxiliary rotor shaft 36 includes modifying primary rotor shaft 38 and integrating energy transmission mechanism 34.

For example, in one embodiment, an existing primary rotor shaft 38 is split to enable the introduction of energy transmission mechanism 34 and auxiliary rotor shaft 36. Alternatively, primary rotor shaft 38 is manufactured as a replacement part for the introduction of energy transmission mechanism 34.

Additionally illustrated in the exemplary embodiment, a power generator system 50 generally includes gas turbine engine 10, rotating element 48, and primary rotor shaft 38 coupled to rotating element 48. A generator assembly 52 includes primary generator 30 coupled to primary rotor shaft 38, auxiliary rotor shaft 36 coupled to primary rotor shaft 38, auxiliary generator 32 coupled to auxiliary rotor shaft 36, and energy transmission mechanism 34.

In the exemplary embodiment, a method of assembling a gas turbine engine system 1 includes providing gas turbine engine 10 with rotating element 48. Coupling primary rotor shaft 38 to rotating element 48 and coupling primary generator 30 to primary rotor shaft 38. Coupling auxiliary rotor shaft 36 to primary rotor shaft 38, such that rotation of primary rotor shaft 38 causes rotation of auxiliary rotor shaft 36, and auxiliary shaft 36 is oriented substantially perpendicularly to primary rotor shaft 38. Coupling auxiliary generator 32 to auxiliary rotor shaft 36, such that auxiliary generator 32 is in parallel configuration with primary generator 30. The method also includes coupling auxiliary rotor shaft 36 to primary rotor shaft 38 via energy transmission mechanism 34. Furthermore, auxiliary rotor shaft 36 is coupled to primary rotor shaft 38 either between turbine 18 and primary generator 30, as illustrated in FIG. 1, or such that primary generator 30 is between turbine 18 and auxiliary rotor shaft 36 as described in further detail with respect to FIG. 3 below.

FIG. 2 is a schematic diagram of an alternative gas turbine system 2. As described above in reference to FIG. 1 and with common components, turbine engine 10 is coupled to primary generator 30. Additionally in the exemplary embodiment of FIG. 2, a first auxiliary rotor shaft 42 is coupled to primary rotor shaft 38 with a first energy transmission mechanism 34. A second energy transmission mechanism 44 is coupled to an end of first auxiliary rotor shaft 42 opposite of first energy transmission mechanism 34. A second auxiliary rotor shaft 46 is coupled to second energy transmission mechanism 44 such that the first and second auxiliary rotor shafts 42, 46 are oriented substantially perpendicularly to each other. Auxiliary generator 32 is coupled to second auxiliary rotor shaft 46 opposite of second energy transmission mechanism 44. Although first auxiliary rotor shaft 42 is illustrated as being substantially perpendicular to second auxiliary rotor shaft 46, in alternative embodiments, first auxiliary rotor shaft 42 and second auxiliary rotor shaft 46 may be oriented at any suitable angle relative to each other that enables transfer of mechanical rotational energy as described herein. In the exemplary embodiment, auxiliary generator 32 is coupled to first and second auxiliary rotor shafts 42, 46 such that auxiliary generator 32 is in a parallel configuration to primary generator 30.

In the exemplary embodiment, second energy transmission mechanism 44 is coupled to an end of first auxiliary rotor shaft 42 of at least one auxiliary rotor shaft 36 opposite first energy transmission mechanism 34. A second auxiliary rotor shaft 46 of at least one auxiliary rotor shaft 36 is coupled to second energy transmission mechanism 44 such that both first and second auxiliary rotor shafts 42, 46 are oriented substantially perpendicularly to each other. The method for assembling gas turbine engine system 2 includes coupling second energy transmission mechanism 44 to end of first auxiliary rotor shaft 42 of at least one auxiliary rotor shaft 36 opposite first energy transmission mechanism 34. Also, coupling second auxiliary rotor shaft 46 of at least one auxiliary rotor shaft 36 to second energy transmission mechanism 44 such that both first and second auxiliary rotor shafts 42, 46 are oriented substantially perpendicularly to each other.

In the exemplary embodiment, auxiliary rotor shaft 36 includes a first auxiliary rotor shaft 42 and second auxiliary rotor shaft 46 coupled together and transferring mechanical rotation energy as described herein from primary rotor shaft 38, through at least one auxiliary rotor shaft 36, and into auxiliary generator 32. Additionally, the first and second energy transmission mechanisms 34, 44 cause the partial or full transfer of mechanical rotational energy from each shaft member connected with. In the exemplary embodiment, both first and second energy transmission mechanisms 34, 44 is a mechanical gear box, such as, but not limited to a hydraulic clutch assembly, a splined quill shaft, a bevel gear, and speed reducing gear. In alternate embodiments, both first and second energy transmission mechanisms 34, 44 may include a different transmission mechanism, such as but not limited to, a hydraulic gear box. Also in alternate embodiments each energy transmission mechanism may be a similar type energy transmission mechanism, or may be a different type energy transmission mechanism.

In the exemplary embodiment, first auxiliary rotor shaft 42 is between turbine 18 and primary generator 30. Also in the illustrative embodiment, first energy transmission mechanism 34 is between turbine 18 and primary generator 30. Although both first auxiliary rotor shaft 42 and first energy transmission mechanism 34 are illustrated as being on turbine 18 side of gas turbine engine 10, in alternative embodiments, both first auxiliary rotor shaft 42 and first energy transmission mechanism 34 may be located on the compressor 14 side of gas turbine engine 10, as described in further detail with respect to FIG. 4 below.

Additionally illustrated in the exemplary embodiment, power generator system 50 generally includes gas turbine engine 10, rotating element 48, and primary rotor shaft 38 coupled to rotating element 48 as described above in reference to FIG. 1. A generator assembly 54 includes first and second auxiliary rotor shafts 42, 46 coupled to primary rotor shaft 38, and auxiliary generator 32 coupled to first and second auxiliary rotor shafts 42, 46. First energy transmission mechanism 34 coupled between primary rotor shaft 38 and first auxiliary rotor shaft 42. Generator assembly 54 further includes second energy transmission mechanism 44 coupled to first auxiliary rotor shaft 42 opposite first energy transmission mechanism 34, and second auxiliary rotor shaft 46 coupled to second energy transmission mechanism 44.

FIG. 3 is a schematic diagram of a second alternative gas turbine system 3. As described above in reference to FIG. 1 and with common components, a turbine engine 10 is coupled to primary generator 30. Additionally in the exemplary embodiment of FIG. 3, first auxiliary rotor shaft 42 is coupled to primary rotor shaft 38. Energy transmission mechanism 34 is coupled to an end of first auxiliary rotor shaft 42 opposite of primary generator 30. Second auxiliary rotor shaft 46 is coupled to energy transmission mechanism 34 such that the first and second auxiliary rotor shafts 42, 46 are oriented substantially perpendicularly to each other. Auxiliary generator 32 is coupled to second auxiliary rotor shaft 46 opposite of energy transmission mechanism 34. Although first auxiliary rotor shaft 42 is illustrated as being substantially perpendicular to second auxiliary rotor shaft 46, in alternative embodiments, first auxiliary rotor shaft 42 and second auxiliary rotor shaft 46 may be oriented at any suitable angle relative to each other that enables transfer of mechanical rotational energy as described herein. In the exemplary embodiment, auxiliary generator 32 is coupled to first and second auxiliary rotor shafts 42, 46 such that auxiliary generator 32 is in a parallel configuration to primary generator 30.

In the exemplary embodiment, primary generator 30 is between turbine 18 and first auxiliary rotor shaft 42. Also in the exemplary embodiment, primary generator 30 is between turbine 18 and energy transmission mechanism 34. Although both first auxiliary rotor shaft 42 and energy transmission mechanism 34 are illustrated as being on turbine 18 side of gas turbine engine 10, in alternative embodiments, both first auxiliary rotor shaft 42 and energy transmission mechanism 34 may be located on the compressor 14 side of gas turbine engine 10, as described in further detail with respect to FIG. 4 below.

Additionally illustrated in the exemplary embodiment, power generator system 50 generally includes gas turbine engine 10, rotating element 48, and primary rotor shaft 38 coupled to rotating element 48 as described above in reference to FIG. 1. A generator assembly 56 includes first and second auxiliary rotor shafts 42, 46 coupled to primary rotor shaft 38, and auxiliary generator 32 coupled to first and second auxiliary rotor shafts 42, 46. First energy transmission mechanism 34 coupled between first auxiliary rotor shaft 42 and second auxiliary rotor shaft 46.

FIG. 4 is a schematic diagram of a third alternative gas turbine system 4. As described above in reference to FIG. 1 and with common components, a turbine engine 10 is coupled to primary generator 30. However, in the exemplary embodiment, the primary generator 30, primary rotor shaft 38, energy transmission mechanism 34, auxiliary generator 32, and auxiliary rotor shaft 36 are located on the compressor 14 side of gas turbine engine 10. In the exemplary embodiment, compressor 14 is a rotating element 48.

Additionally illustrated in the exemplary embodiment, power generator system 50 generally includes gas turbine engine 10, rotating element 48, and primary rotor shaft 38 coupled to rotating element 48 as described above in reference to FIG. 1. A generator assembly 52 includes primary generator 30 coupled to primary rotor shaft 38, auxiliary rotor shaft 36 coupled to primary rotor shaft 38, auxiliary generator 32 coupled to auxiliary rotor shaft 36, and energy transmission mechanism 34 as also described above in reference to FIG. 1.

Exemplary embodiments of the gas turbine engine system and the power generation system include an auxiliary rotor shaft, an energy transmission mechanism, and an auxiliary generator in parallel configuration are described above in detail. Additionally, and the method for assembling the gas turbine system with an auxiliary generator in parallel configuration, is described above in detail. The exemplary embodiments provide advantages in realizing mechanical output from the turbine engine. Extensive outage durations for the turbine and generator are not required thereby reducing costs. Retrofitting or replacing generators is also not required thereby reducing costs. The exemplary embodiments eliminate the need to physically displace either turbine and/or primary generator reducing costs and down time. Providing an auxiliary generator in parallel configuration facilitates improving operation of the existing primary generator. As such, the benefits of upgrading the turbine are not limited by the primary generator.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assemblies and methods.

While the disclosure has been described in terms of various specific embodiments, those skilled in the art will recognize that the disclosure can be practiced with modification within the spirit and scope of the claims. Although specific features of various embodiments of the disclosure may be shown in some drawings and not in others, this is for convenience only. Moreover, references to "one embodiment" in the above description are not intended to be interpreted as excluding the existence of additional embodiments that also incorporate the recited features. In accordance with the principles of the disclosure, any feature of a drawing may be referenced and/or claimed in combination with any feature of any other drawing.

Various aspects and embodiments of the present invention are defined by the following numbered clauses:
1. A gas turbine engine system comprising:
   a gas turbine engine comprising a rotating element;
   at least one primary rotor shaft coupled to said rotating element;
   a primary generator coupled to said at least one primary rotor shaft;
   at least one auxiliary rotor shaft coupled to said at least one primary rotor shaft such that rotation of said at least one primary rotor shaft causes rotation of said at least one auxiliary rotor shaft, wherein said at least one auxiliary rotor shaft is oriented substantially perpendicularly to said at least one primary rotor shaft; and
   an auxiliary generator coupled to said at least one auxiliary rotor shaft such that said auxiliary generator is in parallel configuration to said primary generator.
2. The system of clause 1, further comprising:
   at least a first energy transmission mechanism coupled between said at least one primary rotor shaft and said at least one auxiliary rotor shaft.
3. The system of any preceding clause, further comprising:
   a second energy transmission mechanism coupled to an end of a first auxiliary rotor shaft of said at least one auxiliary rotor shaft opposite said first energy transmission mechanism; and
   a second auxiliary rotor shaft of said at least one auxiliary rotor shaft coupled to said second energy transmission mechanism such that said first and second auxiliary rotor shafts are oriented substantially perpendicularly.
4. The system of any preceding clause, wherein said first energy transmission mechanism is a mechanical gear box.
5. The system of any preceding clause, wherein said mechanical gear box is a splined quill shaft.
6. The system of any preceding clause, wherein said mechanical gear box comprises at least one of a bevel gear and a speed reducing gear.
7. The system of any preceding clause, wherein said first energy transmission mechanism is a hydraulic gear box.
8. The system of any preceding clause, wherein said at least one auxiliary rotor shaft is between said rotating element and said primary generator.
9. The system of any preceding clause, wherein said primary generator is between said rotating element and said at least one auxiliary rotor shaft.
10. The system of any preceding clause, wherein said rotating element includes a turbine.
11. The system of any preceding clause, wherein said rotating element includes a compressor.
12. A power generator system comprising:
   a turbine engine assembly comprising:
      a gas turbine engine comprising a rotating element;
      at least one primary rotor shaft coupled to said rotating element;
      a generator assembly comprising:
   a primary generator coupled to said at least one primary rotor shaft;
   at least one auxiliary rotor shaft coupled to said at least one primary rotor shaft such that rotation of said at least one primary rotor shaft causes rotation of said at least one auxiliary rotor shaft, wherein said at least one auxiliary rotor shaft is oriented substantially perpendicularly to said at least one primary rotor shaft;
   an auxiliary generator coupled to said at least one auxiliary rotor shaft such that said auxiliary generator is in parallel configuration to said primary generator; and
   at least a first energy transmission mechanism coupled between said at least one primary rotor shaft and said at least one auxiliary rotor shaft.
13. The system of any preceding clause, wherein said generator assembly further comprises:
   a second energy transmission mechanism coupled to an end of a first auxiliary rotor shaft of said at least one auxiliary rotor shaft opposite said first energy transmission mechanism; and
   a second auxiliary rotor shaft of said at least one auxiliary rotor shaft coupled to said second energy transmission mechanism such that said first and second auxiliary rotor shafts are oriented substantially perpendicularly.
14. The system of any preceding clause, wherein said first and second energy transmission mechanism is a mechanical gear box.
15. The system of any preceding clause, wherein said mechanical gear box comprises at least one of a splined quill shaft, a bevel gear, and a speed reducing gear.
16. The system of any preceding clause, wherein said first and second energy transmission mechanism is a hydraulic gear box.
17. The system of any preceding clause, wherein said rotating element includes a turbine.
18. The system of any preceding clause, wherein said first energy transmission mechanism is between said turbine and said primary generator.
19. The system of any preceding clause, wherein said rotating element includes a compressor.
20. The system of any preceding clause, wherein said primary generator is between said compressor and said first energy transmission mechanism.

## Claims

1. A gas turbine engine system (1,2,3,4) comprising:
a gas turbine engine (10) comprising a rotating element (48);
at least one primary rotor shaft (38) coupled to said rotating element (48);
a primary generator (30) coupled to said at least one primary rotor shaft (38);
at least one auxiliary rotor shaft (36) coupled to said at least one primary rotor shaft (38) such that rotation of said at least one primary rotor shaft (38) causes rotation of said at least one auxiliary rotor shaft (36), wherein said at least one auxiliary rotor shaft (36) is oriented substantially perpendicularly to said at least one primary rotor shaft (38); and
an auxiliary generator (32) coupled to said at least one auxiliary rotor shaft (36) such that said auxiliary generator (32) is in parallel configuration to said primary generator (30).

2. The system of Claim 1 further comprising:
at least a first energy transmission mechanism (34) coupled between said at least one primary rotor shaft (38) and said at least one auxiliary rotor shaft (36).

3. The system of Claim 2 further comprising:
a second energy transmission mechanism (44) coupled to an end of a first auxiliary rotor shaft (42) of said at least one auxiliary rotor shaft (36) opposite said first energy transmission mechanism (34); and
a second auxiliary rotor shaft (46) of said at least one auxiliary rotor shaft (36) coupled to said second energy transmission mechanism (44) such that said first and second auxiliary rotor shafts (42,46) are oriented substantially perpendicularly.

4. The system of Claim 2 or Claim 3, wherein said first energy transmission mechanism (34) is a mechanical gear box.

5. The system of Claim 4, wherein said mechanical gear box is a splined quill shaft.

6. The system of Claim 2 or Claim 3, wherein said first energy transmission mechanism (34) is a hydraulic gear box.

7. The system of any preceding Claim, wherein said at least one auxiliary rotor shaft (36) is between said rotating element (48) and said primary generator (30).

8. The system of any preceding Claim, wherein said primary generator (30) is between said rotating element (48) and said at least one auxiliary rotor shaft (36).

9. The system of any preceding Claim, wherein said rotating element (48) includes a turbine (18).

10. The system of any preceding Claim, wherein said rotating element (48) includes a compressor (14).
